(19) Europäisches Patentamt
European Patent Office
Office européen des brevets

(11) **EP 1 887 568 B1**

(12) **EUROPEAN PATENT SPECIFICATION**

(45) Date of publication and mention
of the grant of the patent:
**17.02.2010 Bulletin 2010/07**

(51) Int Cl.:
***G11B 5/84*** (2006.01)

(21) Application number: **06016168.4**

(22) Date of filing: **02.08.2006**

(54) **Heat assisted magnetic recording medium and method for fabricating the same**

Wärmeunterstütztes magnetisches Aufzeichnungsmedium und Verfahren zu dessen Herstellung

Support d'enregistrement magnétique assisté et procédé de fabrication correspondant

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**13.02.2008 Bulletin 2008/07**

(73) Proprietor: **Kuo, Po-Cheng**
**Jhongjheng District**
**Taipei City 100 (TW)**

(72) Inventors:
• **Kuo, Po-Cheng**
**Jhongjheng District**
**Taipei City 100 (TW)**
• **Fang, Yen-Hsiang**
**Jhongjheng District**
**Taipei City 100 (TW)**

• **Sun, An-Cheng**
**Jhongjheng District**
**Taipei City 100 (TW)**
• **Yang, Tao-Hsuan**
**Jhongjheng District**
**Taipei City 100 (TW)**
• **Chou, Chun-Yuan**
**Jhongjheng District**
**Taipei City 100 (TW)**
• **Chang, Ching-Ray**
**Da-an District**
**Taipei City 106 (TW)**

(74) Representative: **Müller - Hoffmann & Partner**
**Patentanwälte**
**Innere Wiener Strasse 17**
**81667 München (DE)**

(56) References cited:
**WO-A-2004/086427**   **JP-A- 2002 203 306**
**US-A1- 2003 064 249**   **US-A1- 2005 041 335**

**Description**

The present invention relates to a recording medium and the fabrication method therefor, and more particularly to a heat assisted magnetic recording (HAMR) medium and the fabrication method therefor.

Currently, the heat assisted magnetic recording (HAMR) method with writing and magnetic flux reading is well proposed for increasing the perpendicular recording density of the magnetic disk, where the amorphous rare earth-transition metal (RE-TM) thin films are usually applied as the recording medium therefor.

The RE-TM thin film is advantageous in having the perpendicular magnetic anisotropy above $10^6$ erg/cm$^3$ and exhibiting the perpendicular magnetization, and thus it is always considered as a candidate for HAMR. Generally, the recording medium for HAMR needs to be provided with the following properties including a satisfactory magneto-optical writing performance, a large saturation magnetization, Ms, that generates a sufficient magnetic flux for the giant magnetoresistance (GMR) head or the tunneling magnetoresistance (TMR) head readout, and a large perpendicular coercivity, Hc⊥, so as to resist the self-demagnetization. Apparently, the traditional magneto-optical (MO) recording medium is not suitable for being applied for HAMR because such medium fails to generate sufficient magnetic flux for GMR or TMR head readout owing to the relatively lower saturation magnetization (Ms) value thereof.

Prior art document US 2005/0041335 A1 (cf. the preamble of the independent claims) discloses a magnetic recording medium which includes a functional layer of TbCo and a recording layer of FePt overlying the functional layer.

Further, in prior art document WO 2004/086427 A (corresponding to US 2006/0188743 A1), an FePt magnetic thin film and a method for manufacturing this FePt magnetic thin film are disclosed.

The atomic composition thereof is $Fe_xPt_{100-x}$, wherein $19 < x < 52$.

Finally, prior art document US 2003/0064249 A1 discloses a magnetic recording medium including a nonmagnetic substrate, at least a nonmagnetic underlayer, a first magnetic layer, a second magnetic layer, a protective layer, and a liquid lubricant layer which are sequentially laminated on the substrate. However, all of these known recording media cannot achieve high Ms and Hc⊥ values.

For overcoming the drawbacks of the conventional recording medium with a relatively lower Ms values, an improved HAMR medium of a FePt/CoTb bi-layer structure is provided according to the present invention, in which the Ms value and Hc⊥ value thereof are significantly enhanced owing to a relatively high Ms value of the FePt (001) thin film and a relatively high exchange energy at the interface between the FePt/CoTb bi-layer structure.

It is a first aspect of the present invention to provide a heat assisted magnetic recording (HAMR) medium with a relatively high saturation magnetization (Ms) and perpendicular coercivity (Hc⊥), so as to produce sufficient magnetic flux under the room temperature for signal readout.

It is a second aspect of the present invention to provide a method for fabricating a novel HAMR medium which exhibits a relatively high saturation magnetization (Ms) and perpendicular coercivity (Hc), so that the provided HAMR medium is suitable for being readout by the giant magneto-resistive (GMR) head or the tunneling magneto-resistive (TMR) head under the room temperature.

In accordance with the first aspect of the present invention, a magnetic recording medium according to claim 1 is provided. The provided medium includes a substrate, an underlayer located on the substrate, a buffer layer located on the underlayer, a magnetic layer located on the buffer layer and a recording and reading layer located on the magnetic layer.

Preferably, the substrate is one of a glass substrate and an oxidized Si substrate.

Preferably, the underlayer is a Cr layer.

Preferably, the Cr layer has a thickness ranged from 10 to 100 nm.

Preferably, the thickness of the Cr layer is 70 nm.

Preferably, the buffer layer is a Pt layer.

Preferably, the Pt layer has a thickness ranged from 1 to 10 nm.

Preferably, the thickness of the Pt layer is 2 nm.

The magnetic layer is a $Fe_xPt_{100-x}$ layer and the recording and reading layer is a $Co_yTb_{100-y}$ layer, wherein x is ranged from 45 to 55 and y is ranged from 65.8 to 71.9.

Preferably, x is 50 and y is 70.44.

Preferably, the $Fe_xPt_{100-x}$ layer has a thickness ranged from 5 to 60 nm, and the $Co_yTb_{100-y}$ layer has a thickness ranged from 20 nm to 60 nm.

Preferably, the thickness of the $Fe_xPt_{100-x}$ layer is 20 nm, and the thickness of the $Co_yTb_{100-y}$ layer is 50 nm.

In accordance with the mentioned aspect, the provided heat assisted magnetic recording medium further includes a passiviation layer located on the recording and reading layer.

Preferably, the passiviation layer is a layer of silicon nitride.

In accordance with the second aspect of the present invention, a method for fabricating a magnetic recording medium according to claim 12, is provided. The provided method includes steps of: (a) providing a substrate; (b) performing a thermal process to the substrate; (c) forming an underlayer of Cr on the substrate; (d) forming a buffer layer of Pt on the underlayer; (e) forming a layer of $Fe_xPt_{100-x}$ on the buffer layer; and (f) forming a layer of $Co_yTb_{100-y}$ on the layer of $Fe_xPt_{100-x}$.

Preferably, the step (b) further includes a step of heating the substrate to a first temperature.

Preferably, the first temperature is less than 800°C.

Preferably, the first temperature is 350°C.

Preferably, in the step (b), the thermal process is performed for 5 to 90 minutes.

Preferably, in the step (b), the first temperature is 350°C, and the thermal process is performed for 30 minutes.

Preferably, in the step (b), the thermal process is performed under a pressure ranged from $1 \times 10^{-9}$ to $1 \times 10^{-6}$ Torr.

Preferably, in the step (c), the buffer layer of Cr is formed on the substrate under a temperature of 3 50°C.

Preferably, in the step (d), the buffer layer of Pt is formed on the underlayer under a second temperature below 800°C.

Preferably, the second temperature is 350°C.

Preferably, in the step (e), the layer of $Fe_xPt_{100-x}$ is formed on the buffer layer under a third temperature below 800°C.

Preferably, the third temperature is 420°C.

Preferably, in the step (f), the layer of $Co_yTb_{100-y}$ is formed on the layer of $Fe_xPt_{100-x}$ under a fourth temperature below 50°C.

Preferably, the fourth temperature is an ambient temperature.

Preferably, the underlayer of Cr, the buffer layer of Pt, the layer of $Fe_xPt_{100-x}$ and the layer of $Co_yTb_{100-y}$ are formed by DC magnetron sputtering in an ultrahigh vacuum sputtering chamber.

Preferably, the underlayer of Cr, the buffer layer of Pt, the layer of $Fe_xPt_{100-x}$ and the layer of $Co_yTb_{100-y}$ are deposited under an argon pressure ranged from 2 to 12 mTorr.

Preferably, the argon pressure is 5 mTorr.

Preferably, the layer of $Fe_xPt_{100-x}$ is deposited by DC magnetron sputtering with a first DC power ranged from 0.2 to 0.5 $W/cm^2$.

Preferably, the first DC power is 0.22 $W/cm^2$.

Preferably, the layer of $Co_yTb_{100-y}$ is deposited by DC magnetron sputtering with a second DC power ranged from 1 to 4 $W/cm^2$.

Preferably, the second DC power is 2.96 $W/cm^2$.

In accordance with the mentioned aspect, the present method further includes a step of (g) forming a passiviation layer on the layer of $Co_yTb_{100-y}$.

Preferably, the passiviation layer is formed by magnetron sputtering with an RF power ranged from 2 to 7 $W/cm^2$.

Preferably, the RF power is 2.47 $W/cm^2$.

The foregoing and other features and advantages of the present invention will be more clearly understood through the following descriptions with reference to the drawings, wherein:

Fig. 1 is a flow chart illustrating the method for fabricating the heat assisted magnetic recording (HAMR) medium according to a preferred embodiment of the present invention;

Fig. 2 is a cross-sectional view schematically illustrating the fabricated HAMR medium according to the preferred embodiment of the present invention;

Fig. 3 is a diagram illustrating the M-H loop of a pre-deposited $Co_{70}Tb_{30}$ layer under the ambient temperature;

Fig. 4(A) and Fig. 4(B) are diagrams respectively illustrating the XRD pattern and the M-H loop of the pre-deposited FePt(001)/Pt(001)/Cr(002) layer sequence according to the present invention;

Fig. 5 is a diagram illustrating the Ms value variation and the $Hc_\perp$ value variation of the HAMR medium depending on the thickness of the $Co_{70}Tb_{30}$ layer thereof in accordance with the present invention;

Fig. 6 is a diagram illustrating the M-H loop of the provided $Co_{70}Tb_{30}$/FePt(001)/Pt(001)/Cr(002) layer sequence of the HAMR medium according to the presnet invention;

Fig. 7 is a diagram illustrating the comparison for M-H loop of the conventional $Co_{70}Tb_{30}$ recording layer, the provided FePt(001)/Pt(001)/Cr(002) layer sequence and the provided $Co_{70}Tb_{30}$/FePt(001)/Pt(001)/Cr(002) layer sequence of the HAMR medium according to the presnet invention;

Fig. 8 is a TEM photo showing the cross-sectional view of the provided $Co_{70}Tb_{30}$/FePt(001)/Pt(001)/Cr(002) layer sequence of the HAMR medium according to the presnet invention; and

Fig. 9 is a diagram illustrating the Ms value variation and the $Hc_\perp$ value variation of the $Co_{70}Tb_{30}$/FePt(001) layer sequence of the HAMR medium depending on the temperature in accordance with the present invention.

The present invention will now be described more specifically with reference to the following embodiments. It is to be noted that the following descriptions of preferred embodiments of this invention are presented herein for purpose of illustration and description only; it is not intended to be exhaustive or to be limited to the precise form disclosed.

In accordance with the preferred embodiment of the present invention, the improved heat assisted magnetic recording (HAMR) medium is achieved by a novel recording layer sequence of a first magnetic layer and a second magnetic layer.

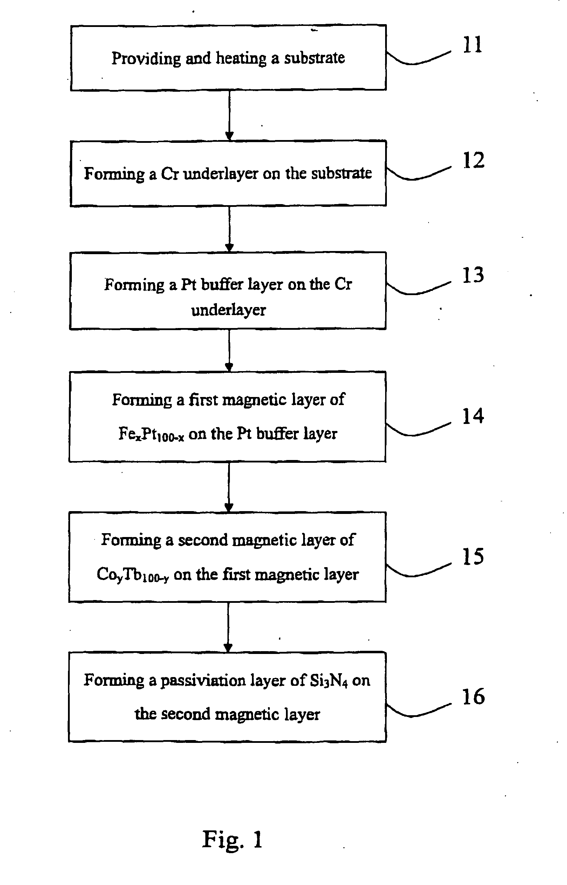

The fabrication method for the heat assisted magnetic recording (HAMR) medium according to the present invention is illustrated with reference to Fig. 1.

Please refer to Fig. 1, which is a flow chart illustrating the method for fabricating the HAMR medium according to a preferred embodiment of the present invention. According to the preferred embodiment, a substrate is first provided and heated to about 350°C, as shown in the step 11. An underlayer of Cr is formed on the substrate, as shown in the step 12. Subsequently, a buffer layer of Pt is formed on the underlayer, as shown in the step 13. Afterward, a magnetic layer of $Fe_xPt_{100-x}$ is formed on the buffer layer and then a recording and reading layer of $Co_yTb_{100-y}$ is formed thereon, as shown in the steps 14 and 15, respectively. A passiviation layer of $Si_3N_4$ is formed on the resulting layer sequence, and then the HAMR medium according to the present invention is hence fabricated, as shown in the step 16.

In the present invention, the underlayer, the buffer layer, the first magnetic layer and the second magnetic layer are formed by DC magnetron sputtering in an ultrahigh vacuum sputtering chamber, where the targets of CoTb alloy and FePt alloy as well as the respective metallic targets of Co, Tb, Fe and Pt are adoptable therefor. The sputtering process is performed under an argon pressure ranged from 2 to 12 mTorr, and preferably, an argon pressure of 5 mTorr, wherein the first magnetic layer is deposited by DC magnetron sputtering with a first DC power ranged from 0.2 to 0.5 $W/cm^2$ (preferably 0.22 $W/cm^2$), and the second magnetic layer is deposited with a second DC power ranged from 1 to 4 $W/cm^2$ (preferably 2.96 $W/cm^2$).

The passiviation layer of $Si_3N_4$ is formed by magnetron sputtering with an RF power ranged from 2 to 7 $W/cm^2$ (preferably 2.47 $W/cm^2$).

In accordance with the present invention, the substrate temperature is controlled below 800°C, and preferably at 350°C while depositing the underlayer of Cr, the buffer layer of Pt and the first magnetic layer of $Fe_xPt_{100-x}$. Moreover, when the second magnetic layer of $Co_yTb_{100-y}$ is deposited, the substrate temperature is controlled below 50°C, and preferably at the ambient temperature. Furthermore, the annealing process is performed at an annealing temperature ranged from 300 to 800°C with a time period ranged from 5 to 90 minutes. In a preferred embodiment, the annealing temperature is 350°C and the time period is 30 minutes, and the layer sequence is annealed under a working pressure below $1 \times 10^{-6}$ Torr, and preferably, under a working pressure of $1 \times 10^{-9}$ Torr.

In a further preferred embodiment according to the present invention, the $Fe_{50}Pt_{50}(001)/Pt(001)/Cr(200)$ layer sequence is fabricated on the 7059 corning glass substrate by DC magnetron sputtering in an ultrahigh vacuum sputtering chamber. Alternatively, a cleaned quartz substrate or a naturally oxidized silicon substrate is also adoptable in the present invention. The base pressure is controlled better than $5 \times 10^{-9}$ torr before sputtering. The substrate is heated to 350°C and the Cr(200) underlayer as well as the Pt(001) buffer layer are deposited thereon. The deposition temperature for the $Fe_{50}Pt_{50}$ (20 nm) magnetic layer is set to 420°C, so as to overcome the order-disorder transformation energy barrier to yield the $L1_0$ FePt phase therefor. The thickness of the Cr underlayer and the Pt buffer layer is 70 nm and 2 nm, respectively. In the present invention, the $Co_yTb_{100-y}$ layers with various thicknesses (20 nm ~ 60 nm) are deposited on the $Fe_{50}Pt_{50}(001)/Pt(001)/Cr(200)$ layer sequence by DC magnetron sputtering at the ambient temperature, and finally, the passiviation layer of $Si_3N_4$ (20 nm) is deposited thereon for protecting the resulting layer sequence from oxidation.

The sputtering parameters for the preparation of Cr, Pt, $Fe_xPt_{100-x}$ and $Co_yTb_{100-y}$ layers are listed as Table 1. The base pressure of the sputter chamber is controlled at approximately $5 \times 10^{-9}$ Torr, and the mentioned layers are deposited under an argon pressure $P_{Ar}$ ranged between 2 and 12 mTorr, so as to obtain a relatively improved magnetic property thereof. In more specifics, the argon pressure $P_{Ar}$ of 5 mTorr is preferred.

Table 1

| | |
|---|---|
| Deposition Temperature for $Co_{70}Tb_{30}$ | Ambient Temperature |
| Deposition Temperature for FePt (001) | 420°C |
| RF Power Density | 2~7 $W/cm^2$ for $Si_3N_4$ Target |
| DC Power Density | 1~4 $W/cm^2$ for CoTb Target |
| DC Power Density | 0.2~0.5 $W/cm^2$ for FePt Target |
| Base Vacuum | $5 \times 10^{-9}$ Torr |
| Distance between Substrate and Target | 9 cm |
| Argon Pressure | 0.3~20 mTorr |

(continued)

| Argon Flow Rate | 20 mL/min |
|---|---|

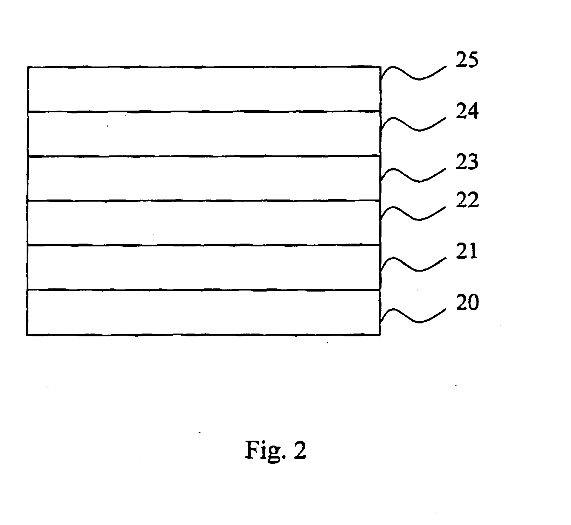

Please refer to Fig. 2, which is a cross-sectional view schematically illustrating the fabricated HAMR medium according to the preferred embodiment of the present invention. The HAMR medium includes a substrate 20 which is a quartz substrate or a naturally oxidized silicon substrate, and thereon includes a layer sequence of an underlayer 21, a buffer layer 22, a magnetic layer 23, a recording and reading layer 24, and a passiviation layer 25.

In a preferred embodiment, the underlayer 21 is made of Cr, the buffer layer 22 is made of Pt, the magnetic layer 23 and the recording and reading layer 24 are respectively made of $Fe_xPt_{100-x}$ and $Co_yTb_{100-y}$, and the passiviation layer 25 is a $Si_3N_4$ layer.

According to the present invention, the thickness of the Cr layer is ranged from 10 to 100 nm (preferably 70 nm), and the thickness of the Pt layer is ranged from 1 to 10 nm (preferably 2 nm). The thickness of the $Fe_xPt_{100-x}$ layer is ranged from 5 to 60 nm, and the thickness of the $Co_yTb_{100-y}$ layer is ranged from 20 nm to 60 nm. More preferably, the thickness of the $Fe_xPt_{100-x}$ layer is 20 nm, and the thickness of the $Co_yTb_{100-y}$ layer is 50 nm. Furthermore, the x value for the $Fe_xPt_{100-x}$ layer is ranged from 45 to 55 and the y value for the $Co_yTb_{100-y}$ layer is ranged from 65.8 to 71.9, and more preferably, x is 50 and y is 70.44.

In the present invention, the structure of the fabricated layer sequence is examined by an X-ray diffractometer (XRD) with Cu-K$\alpha$ radiation and by Philips Tecnai F30 field emission gun transmission electron microscopy (TEM). The composition as well as the homogeneity of the CoTb magnetic layer is determined by means of energy disperse spectrum (EDS). The thickness of the fabricated layer sequence is measured by an atomic force microscope (AFM), and the magnetic properties thereof are measured by a vibrating sample magnetometer (VSM) with a maximum applied field of 12 kOe.

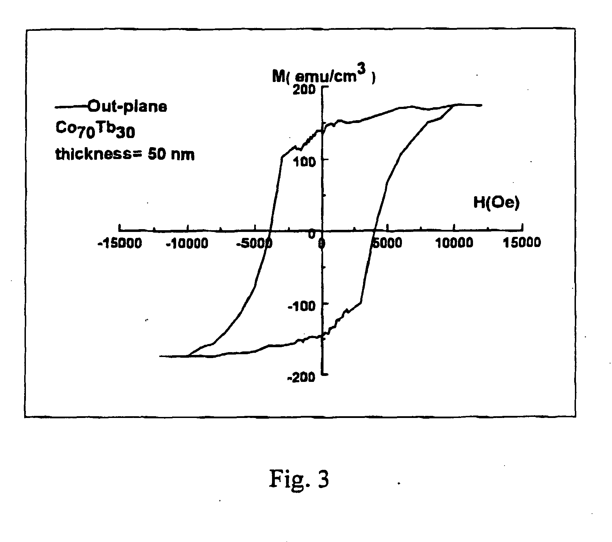

Please refer to Fig. 3, which is a diagram showing the M-H loop of the $Co_{70}Tb_{30}$ magnetic layer at the ambient temperature. It is shown that the coericivity ($Hc_\perp$) and the saturation magnetization (Ms) of the $Co_{70}Tb_{30}$ magnetic layer are approximately 3600 Oe and 176emu/$cm^3$, respectively, where the saturation magnetization is too small to be detected by a high resolution giant magneto-resistive (GMR) head or a tunneling magneto-resistive (TMR) head. Therefore, the FePt(001) layer is introduced under the $Co_{70}Tb_{30}$ layer in accordance with the preferred embodiment of the present invention, so as to increase the Ms value therefor.

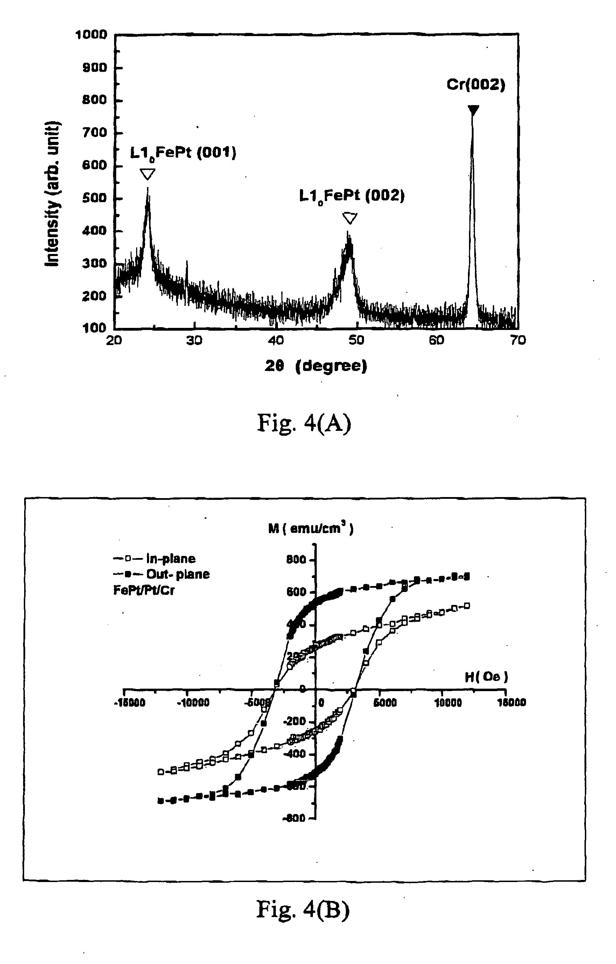

When the Pt(001)/Cr(200) layer sequence is introduced, the preferred orientation of the $L1_0$ FePt layer would switch from $L1_0$ FePt(111) to $L1_0$ FePt(001), and thus the FePt layer may exhibit a perpendicular magnetic anisotropy. In the absence of an Pt intermediate layer, however, the Cr atoms would diffuse directly into the FePt magnetic layer and thus suppress the formation of $L1_0$ FePt(001) preferred orientation. With reference to Fig. 4(A), which is an XRD pattern of FePt/Pt/Cr layer sequence, it is found that there exist the respective peaks of the Cr(002) reflection plane, (001) and (002) superlattice planes of the $L1_0$ FePt(001) phase. With reference to Fig. 4(B), which is a diagram showing the M-H loop of the pre-deposited FePt(001)/Pt(001)/Cr(002) layer sequence according to the present invention. It is apparent that the FePt(001)/Pt(001)/Cr(002) layer sequence exhibits a perpendicular magnetic anisotropy with an out-plane squareness ($S_\perp$) of about 0.8, and the Ms and $Hc_\perp$ values are about 691 emu/$cm^3$ and 3100 Oe, respectively.

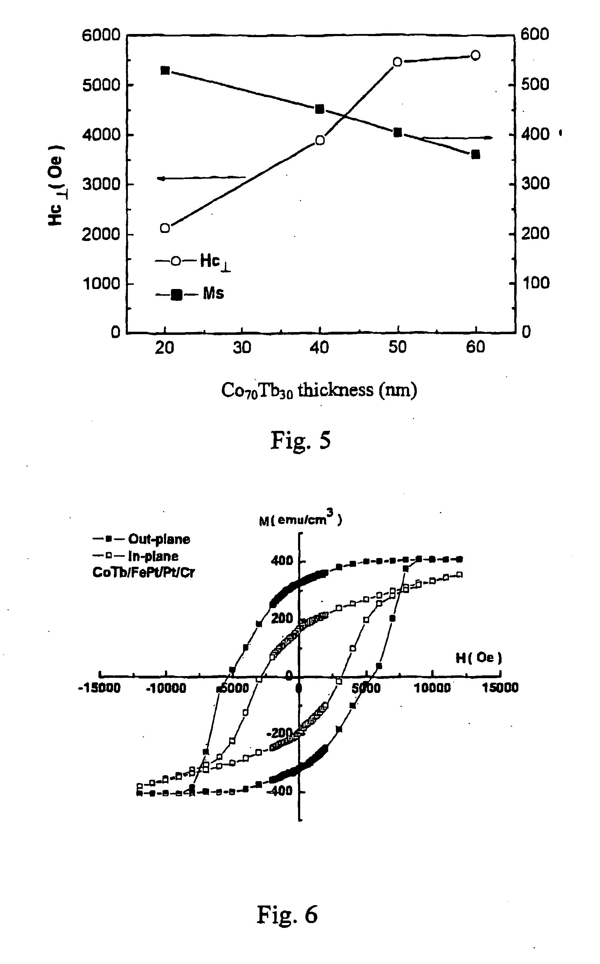

Please refer to Fig. 5, which is a diagram illustrating the Ms value variation and the Hc⊥ value variation of the HAMR medium depending on the thickness of the $Co_{70}Tb_{30}$ layer thereof in accordance with the present invention. As the $Co_{70}Tb_{30}$ film thickness increases from 20 to 60 nm, the Hc⊥ value of the $Co_{70}Tb_{30}$/FePt(001)/Pt/Cr layer sequence may increase from about 2100 to 5700 Oe, and the Ms value thereof may decrease from 530 to 365 emu/$cm^3$. For the HAMR medium, a relatively large Hc⊥ and Ms value at room temperature is always required, and hence the $Co_{70}Tb_{30}$ layer with a thickness of 50 nm is preferred in this case, which is deposited on the FePt(001) magnetic layer in the preferred embodiment.

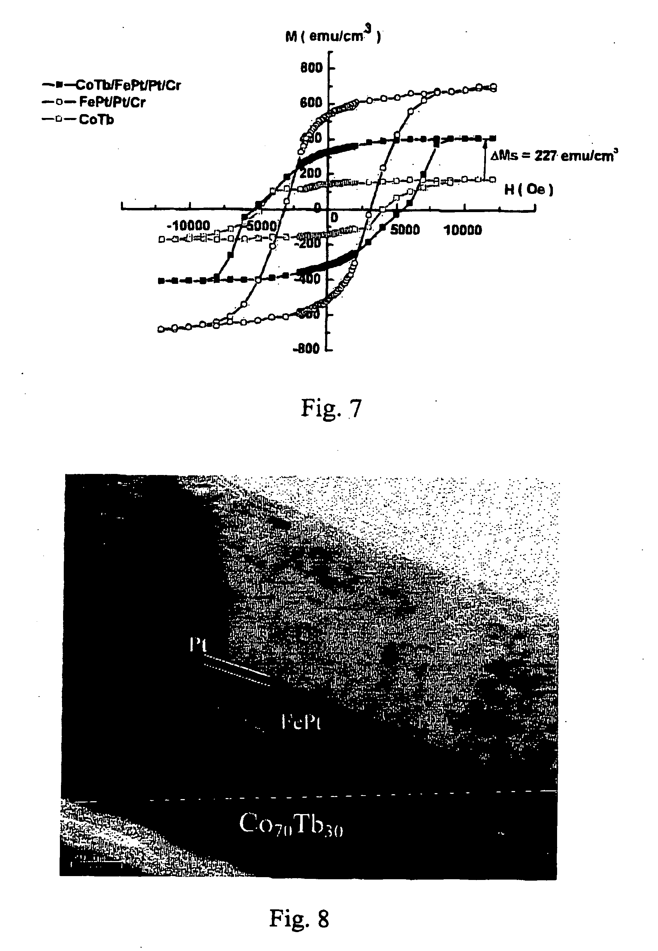

Please refer to Fig. 6, which is a diagram showing the M-H loop of the fabricated $Co_{70}Tb_{30}$/FePt(001)/Pt/Cr layer sequence after the $L1_0$ FePt(001) preferred orientation layer is introduced into the $Co_{70}Tb_{30}$ layer whose thickness is 50 nm thereof. It shows that the $Hc_\perp$, Ms, $S_\perp$ and in-plane squamess ($S_{//}$) of the fabricated layer sequence are 5450 Oe, 403 emu/$cm^3$, 0.82 and 0.38, respectively. Moreover, with reference to Fig. 7 showing the respective M-H loops of a $Co_{70}Tb_{30}$ single layer, a FePt(001) layer and the fabricated $Co_{70}Tb_{30}$/FePt(001)/Pt/Cr layer sequence, it reveals that the Ms value of fabricated $Co_{70}Tb_{30}$/FePt(001)/Pt/Cr (Ms = 403 emu/$cm^3$) is ranged between those of the $Co_{70}Tb_{30}$ single layer (Ms =176 emu/$cm^3$) and the FePt layer (Ms =691 emu/$cm^3$). Since the $Co_{70}Tb_{30}$ layer exhibit a ferrimagnetic property, and the FePt layer exhibits a ferromagnetic one, as well as the Ms value is defined as the moments in the domain of a material per unit volume, the Ms value of the fabricated $Co_{70}Tb_{30}$/FePt(001)/Pt/Cr layer sequence is thus ranged between those of the $Co_{70}Tb_{30}$ layer and the FePt(001)/Pt/Cr layer. On the other hand, the Hc⊥ value of the $Co_{70}Tb_{30}$/FePt(001)/Pt/Cr layer sequence is larger than those of the $Co_{70}Tb_{30}$ layer and the FePt(001) layer. This is because there exists a large exchange coupling energy (about 2.75erg/$cm^2$) at the interface between the $Co_{70}Tb_{30}$ and the FePt(001) layers. The exchange coupling of $Co_{70}Tb_{30}$/FePt(001) layer sequence is derived from the following equa-

tion:

$$\triangle\sigma = H_b \times M_s \times t, \tag{1}$$

where the $H_b$ is the biasing field, Ms is the saturation magnetization of $Co_{70}Tb_{30}$ layer and t is the thickness of FePt (001) layer. Therefore, owing to a relatively large $\Delta\sigma$, it becomes more difficult to reorient the moment of the $Co_{70}Tb_{30}$/FePt(001)/Pt/Cr layer sequence than that of the $Co_{70}Tb_{30}$ or FePt(001) single layer.

With reference to Fig. 8 which is a TEM photo showing the cross-sectional view of the fabricated $Co_{70}Tb_{30}$/FePt(001)/Pt/Cr layer sequence, it reveals that the interface between the $Co_{70}Tb_{30}$ and FePt(001) layers is rough. Such roughness would create some areas of different domain orientations, and thus the uncompensated surfaces are increased. The more the uncompensated areas exist, the larger exchange interaction could be obtained.

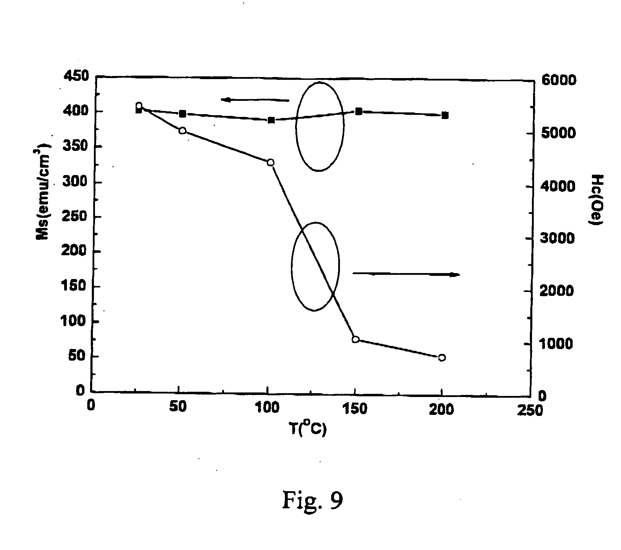

Please refer to Fig. 9, which is a diagram illustrating the Ms value variation and the $Hc_\perp$ value variation of the $Co_{70}Tb_{30}$/FePt(001) layer sequence of the HAMR medium depending on the temperature in accordance with the present invention. It shows that the Ms value of the fabricated $Co_{70}Tb_{30}$/FePt(001) layer sequence almost keeps at a constant of about 400 emu/cm$^3$, even the temperature increases from the ambient temperature to 200°C, while the $Hc_\perp$ value thereof decreases from 5450 to 730 Oe. Such rapid decrement of $Hc_\perp$ value exactly satisfies the requirement for writing for the HAMR medium.

Through the present invention, a novel heat assisted magnetic recording (HAMR) medium and the fabrication method therefor are provided. The exchange coupling effect occurring at the interface of FePt/CoTb double layers is adopted, so that domains of the recording layer would be reproduced to the readout layer, and thus the resulting magnetic flux would be sufficient enough to be detected and readout under the room temperature. The provided HAMR medium exhibits a relatively high saturation magnetization and perpendicular coercivity, and thus possesses a great potential for the ultra-high density recording application.

**Claims**

1.  A heat assisted magnetic recording medium comprising a substrate (20), an underlayer of Cr (21) located on the substrate (20), a buffer layer (22) of Pt located on the underlayer (21), a magnetic layer (23) located on the buffer layer (22) and a recording and reading layer (24) located on the magnetic layer (23),
    **characterized in that**

    the magnetic layer (23) is a $Fe_xPt_{100-x}$ layer, wherein x is ranged from 45 to 55; and
    the recording and reading layer (24) is a $Co_yTb_{100-y}$ layer, wherein y is ranged from 65.8 to 71.9.

2.  The heat assisted magnetic recording medium according to claim 1, **characterized in that** the substrate (20) is one of a glass substrate and an oxidized Si substrate.

3.  The heat assisted magnetic recording medium according to claim 1 or 2, **characterized in that** the underlayer (21) has a thickness ranged from 10 to 100 nm.

4.  The heat assisted magnetic recording medium according to claim 3, **characterized in that** the thickness of the underlayer (21) is 70 nm.

5.  The heat assisted magnetic recording medium according to any one of claims 1 to 4, **characterized in that** the buffer layer (22) has a thickness ranged from 1 to 10 nm.

6.  The heat assisted magnetic recording medium according to claim 5, **characterized in that** the thickness of the buffer layer (22) is 2 nm.

7.  The heat assisted magnetic recording medium according to any one of claims 1 to 6, **characterized in that** x is 50 and y is 70.44.

8.  The heat assisted magnetic recording medium according to any one of claims 1 to 7, **characterized in that** the $Fe_xPt_{100-x}$ layer (23) has a thickness ranged from 5 to 60 nm, and the $Co_yTb_{100-y}$ layer (24) has a thickness ranged from 20 nm to 60 nm.

9.  The heat assisted magnetic recording medium according to claim 8, **characterized in that** the thickness of the $Fe_xPt_{100-x}$ layer (23) is 20 nm, and the thickness of the $Co_yTb_{100-y}$ layer (24) is 50 nm.

10. The heat assisted magnetic recording medium according to any one of claims 1 to 9, **characterized in that** the heat assisted magnetic recording medium further comprises a passiviation layer (25) located on the recording and reading layer (24).

11. The heat assisted magnetic recording medium according to claim 10, **characterized in that** the passiviation layer (25) is a layer of silicon nitride.

12. A method for fabricating a heat assisted magnetic recording medium, **characterized in that** the method comprises steps of:

    (a) providing a substrate (11);
    (b) performing a thermal process to the substrate (11);
    (c) forming an underlayer (12) of Cr on the substrate (11);
    (d) forming a buffer layer (13) of Pt on the underlayer (12);
    (e) forming a layer (14) of $Fe_xPt_{100-x}$ on the buffer layer (13), wherein x is ranged from 45 to 55; and
    (f) forming a layer (15) of $Co_yTb_{100-y}$ on the layer of $Fe_xPt_{100-x}$ (14), wherein y is ranged from 65.8 to 71.9.

13. The method according to claim 12, **characterized by** the step (b) comprising a step of:

    heating the substrate (11) to a first temperature.

14. The method according to claim 13, **characterized in that** the first temperature is less than 800°C.

15. The method according to claim 14, **characterized in that** the first temperature is 350°C.

16. The method according to claim 13, **characterized in that** in the step (b), the thermal process is performed for 5 to 90 minutes.

17. The method according to claim 16, **characterized in that** in the step (b), the first temperature is 350°C, and the thermal process is performed for 30 minutes.

18. The method according to any one of claims 12 to 17, **characterized in that** in the step (b), the thermal process is performed under a pressure ranged from $1 \times 10^{-9}$ to $1 \times 10^{-6}$ Torr (1,33 x $10^{-7}$ to 1,33 x $10^{-4}$ Pa).

19. The method according to any one of claims 12 to 18, **characterized in that** in the step (c), the underlayer (12) of Cr is formed on the substrate (11) under a temperature of 350°C.

20. The method according to any one of claims 12 to 19, **characterized in that** in the step (d), the buffer layer (13) of Pt is formed on the underlayer (12) under a second temperature below 800°C.

21. The method according to claim 20, **characterized in that** the second temperature is 350°C.

22. The method according to any one of claims 12 to 21, **characterized in that** in the step (e), the layer (14) of $Fe_xPt_{100-x}$ is formed on the buffer layer (13) under a third temperature below 800°C.

23. The method according to claim 22, **characterized in that** the third temperature is 420°C.

24. The method according to any one of claims 12 to 23, **characterized in that** in the step (f), the layer (15) of $Co_yTh_{100-y}$ is formed on the layer (14) of $Fe_xPt_{100-x}$ under a fourth temperature below 50°C.

25. The method according to claim 24, **characterized in that** the fourth temperature is an ambient temperature.

26. The method according to claim 12, **characterized in that** the underlayer (12) of Cr, the buffer layer (13) of Pt, the layer (14) of $Fe_xPt_{100-x}$ and the layer (15) of $Co_yTb_{100-y}$ are formed by DC magnetron sputtering in an ultrahigh vacuum sputtering chamber.

27. The method according to claim 26, **characterized in that** the underlayer (12) of Cr, the buffer layer (13) of Pt, the layer (14) of $Fe_xPt_{100-x}$ and the layer (15) of $Co_yTb_{100-y}$ are deposited under an argon pressure ranged from 2 to 12 mTorr (0,266 Pa to 1,596 Pa).

28. The method according to claim 27, **characterized in that** the argon pressure is 5 mTorr (0,665 Pa).

29. The method according to any one of claims 26 to 28, **characterized in that** the layer (14) of $Fe_xPt_{100-x}$ is deposited by DC magnetron sputtering with a first DC power ranged from 0.2 to 0.5 W/cm$^2$.

30. The method according to claim 29, **characterized in that** the first DC power is 0.22 W/cm$^2$.

31. The method according to any one of claims 26 to 30, **characterized in that** the layer (15) of $Co_yTb_{100-y}$ is deposited by DC magnetron sputtering with a second DC power ranged from 1 to 4 W/cm$^2$.

32. The method according to claim 31, **characterized in that** the second DC power is 2.96 W/cm$^2$.

33. The method according to any one of claims 12 to 32, **characterized by** further comprising a step of:

   (g) forming a passiviation layer (16) on the layer of $Co_yTh_{100-y}$.

34. The method according to claim 33, **characterized in that** the passiviation layer (16) is formed by magnetron sputtering with an RF power ranged from 2 to 7 W/cm$^2$.

35. The method according to claim 34, **characterized in that** the RF power is 2.47 W/cm$^2$.


**Patentansprüche**

1. Wärmeunterstütztes magnetisches Aufzeichnungsmedium mit einem Substrat (20), einer Unterschicht aus Cr (21), welche auf dem Substrat (20) angeordnet ist, einer Pufferschicht (22) aus Pt, welche auf der Unterschicht (21) angeordnet ist, einer magnetischen Schicht (23), welche auf der Pufferschicht (22) angeordnet ist, und einer Aufzeichnungs- und Leseschicht (24), welche auf der magnetischen Schicht (23) angeordnet ist,
   **dadurch gekennzeichnet,**
   **dass** die magnetische Schicht (23) eine $Fe_xPt_{100-x}$-Schicht ist, wobei x im Bereich von 45 bis 55 liegt, und
   **dass** die Aufzeichnungs- und Leseschicht (24) eine $Co_yTb_{100-y}$-Schicht ist, wobei y im Bereich von 65,8 bis 71,9 liegt.

2. Wärmeunterstütztes magnetisches Aufzeichnungsmedium nach Anspruch 1, **dadurch gekennzeichnet, dass** das Substrat (20) ein Glassubstrat oder ein oxidiertes Si-Substrat ist.

3. Wärmeunterstütztes magnetisches Aufzeichnungsmedium nach Anspruch 1 oder 2, **dadurch gekennzeichnet, dass** die Unterschicht (21) eine Schichtdicke im Bereich von 10 bis 100 nm aufweist.

4. Wärmeunterstütztes magnetisches Aufzeichnungsmedium nach Anspruch 3, **dadurch gekennzeichnet, dass** die Schichtstärke der Unterschicht (21) 70 nm beträgt.

5. Wärmeunterstütztes magnetisches Aufzeichnungsmedium nach einem der Ansprüche 1 bis 4, **dadurch gekennzeichnet, dass** die Pufferschicht (22) eine Schichtstärke im Bereich von 1 bis 10 nm aufweist.

6. Wärmeunterstütztes magnetisches Aufzeichnungsmedium nach Anspruch 5, **dadurch gekennzeichnet, dass** die Schichtstärke der Pufferschicht (22) 2 nm ist.

7. Wärmeunterstütztes magnetisches Aufzeichnungsmedium nach einem der Ansprüche 1 bis 6, **dadurch gekennzeichnet, dass** x gleich 50 und y gleich 70,44 ist.

8. Wärmeunterstütztes magnetisches Aufzeichnungsmedium nach einem der Ansprüche 1 bis 7, **dadurch gekennzeichnet, dass** die $Fe_xPt_{100-x}$-Schicht (23) eine Schichtstärke im Bereich von 5 bis 60 nm aufweist und dass die $Co_yTb_{100-y}$-Schicht (24) eine Schichtstärke im Bereich von 20 nm bis 60 nm aufweist.

9. Wärmeunterstütztes magnetisches Aufzeichnungsmedium nach Anspruch 8, **dadurch gekennzeichnet, dass** die Schichtstärke der $Fe_xPt_{100-x}$-Schicht (23) 20 nm beträgt und dass die Schichtstärke der $Co_yTb_{100-y}$-Schicht (24) 50 nm beträgt.

10. Wärmeunterstütztes magnetisches Aufzeichnungsmedium nach einem der Ansprüche 1 bis 9, **dadurch gekennzeichnet, dass** das wärmeunterstützte magnetische Aufzeichnungsmedium des Weiteren eine Passivierungsschicht (25) aufweist, welche auf der Aufzeichnungs- und Leseschicht (24) angeordnet ist.

11. Wärmeunterstütztes magnetisches Aufzeichnungsmedium nach Anspruch 10, **dadurch gekennzeichnet, dass** die Passivierungsschicht (25) eine Schicht aus Siliziumnitrid ist.

12. Verfahren zum Herstellen eines wärmeunterstützten magnetischen Aufzeichnungsmediums, **dadurch gekennzeichnet, dass** das Verfahren die Schritte aufweist:

    (a) Bereitstellen eines Substrats (11),
    (b) Ausführen eines thermischen Prozesses am Substrat (11),
    (c) Ausbilden einer Unterschicht (12) aus Cr auf dem Substrat (11),
    (d) Ausbilden einer Pufferschicht (13) aus Pt auf der Unterschicht (12),
    (e) Ausbilden einer Schicht (14) aus $Fe_xPt_{100-x}$ auf der Pufferschicht (13), wobei x im Bereich von 45 bis 55 liegt, und
    (f) Ausbilden einer Schicht (15) aus $Co_yTb_{100-y}$ auf der Schicht (14) aus $Fe_xPt_{100-x}$, wobei y im Bereich von 65,8 bis 71,9 liegt.

13. Verfahren nach Anspruch 12, **dadurch gekennzeichnet, dass** der Schritt (b) einen Schritt aufweist des Heizens des Substrats (11) auf eine erste Temperatur.

14. Verfahren nach Anspruch 13, **dadurch gekennzeichnet, dass** die erste Temperatur geringer ist als 800°C.

15. Verfahren nach Anspruch 14, **dadurch gekennzeichnet, dass** die erste Temperatur 350°C beträgt.

16. Verfahren nach Anspruch 13, **dadurch gekennzeichnet, dass** im Schritt (b) der thermische Prozess für 5 bis 90 Minuten durchgeführt wird.

17. Verfahren nach Anspruch 16, **dadurch gekennzeichnet, dass** im Schritt (b) die erste Temperatur 350°C beträgt und dass der thermische Prozess für 30 Minuten durchgeführt wird.

18. Verfahren nach einem der Ansprüche 12 bis 17, **dadurch gekennzeichnet, dass** im Schritt (b) der thermische Prozess unter einem Druck durchgeführt wird, der im Bereich von $1 \times 10^{-9}$ bis $1 \times 10^{-6}$ Torr ($1,33 \times 10^{-7}$ bis $1,33 \times 10^{-4}$ Pa) liegt.

19. Verfahren nach einem der Ansprüche 12 bis 18, **dadurch gekennzeichnet, dass** im Schritt (c) die Unterschicht (12) aus Cr auf dem Substrat (11) unter einer Temperatur von 350°C ausgebildet wird.

20. Verfahren nach einem der Ansprüche 12 bis 19, **dadurch gekennzeichnet, dass** im Schritt (d) die Pufferschicht (13) aus Pt auf der Unterschicht (12) unter einer zweiten Temperatur unterhalb von 800°C ausgebildet ist.

21. Verfahren nach Anspruch 20, **dadurch gekennzeichnet, dass** die zweite Temperatur 350°C beträgt.

22. Verfahren nach einem der Ansprüche 12 bis 21, **dadurch gekennzeichnet, dass** im Schritt (e) die Schicht (14) aus $Fe_xPt_{100-x}$ auf der Pufferschicht (13) unter einer dritten Temperatur unterhalb von 800°C ausgebildet wird.

23. Verfahren nach Anspruch 22, **dadurch gekennzeichnet, dass** die dritte Temperatur 420°C beträgt.

24. Verfahren nach einem der Ansprüche 12 bis 23, **dadurch gekennzeichnet, dass** im Schritt (f) die Schicht (15) aus $Co_yTb_{100-y}$ auf der Schicht (14) aus $Fe_xPt_{100-x}$ unter einer vierten Temperatur unterhalb von 50°C ausgebildet wird.

25. Verfahren nach Anspruch 24, **dadurch gekennzeichnet, dass** die vierte Temperatur eine Umgebungstemperatur ist.

**EP 1 887 568 B1**

26. Verfahren nach Anspruch 12, **dadurch gekennzeichnet, dass** die Unterschicht (12) aus Cr, die Pufferschicht (13) aus Pt, die Schicht (14) aus $Fe_xPt_{100-x}$ und die Schicht (15) aus $Co_yTb_{100-y}$ mittels DC-Magnetronsputtern in einer Ultrahochvakuumsputterkammer ausgebildet werden.

27. Verfahren nach Anspruch 26, **dadurch gekennzeichnet, dass** die Unterschicht (12) aus Cr, die Pufferschicht (13) aus Pt, die Schicht (14) aus $Fe_xPt_{100-x}$ und die Schicht (15) aus $Co_yTb_{100-y}$ unter einem Argondruck im Bereich von 2 bis 12 mTorr (0,266 Pa bis 1,596 Pa) abgeschieden werden.

28. Verfahren nach Anspruch 27, **dadurch gekennzeichnet, dass** der Argondruck 5 mTorr (0,665 Pa) beträgt.

29. Verfahren nach einem der Ansprüche 26 bis 28, **dadurch gekennzeichnet, dass** die Schicht (14) aus $Fe_xPt_{100-x}$ abgeschieden wird durch DC-Magnetronsputtern mit einer ersten DC-Leistung im Bereich von 0,2 bis 0,5 $W/cm^2$.

30. Verfahren nach Anspruch 29, **dadurch gekennzeichnet, dass** die erste DC-Leistung 0,22 $W/cm^2$ beträgt.

31. Verfahren nach einem der Ansprüche 26 bis 30, **dadurch gekennzeichnet, dass** die Schicht (15) aus $Co_yTb_{100-y}$ durch DC-Magnetronsputtern mit einer zweiten DC-Leistung im Bereich von 1 bis 4 $W/cm^2$ abgeschieden wird.

32. Verfahren nach Anspruch 31, **dadurch gekennzeichnet, dass** die zweite DC-Leistung 2,96 $W/cm^2$ beträgt.

33. Verfahren nach einem der Ansprüche 12 bis 32, **dadurch gekennzeichnet, dass** des Weiteren der Schritt vorgesehen ist: (g) Ausbilden einer Passivierungsschicht (16) auf der Schicht aus $Co_yTb_{100-y}$.

34. Verfahren nach Anspruch 33, **dadurch gekennzeichnet, dass** die Passivierungsschicht (16) mittels Magnetronsputtern mit einer RF-Leistung im Bereich von 2 bis 7 $W/cm^2$ ausgebildet wird.

35. Verfahren nach Anspruch 34, **dadurch gekennzeichnet, dass** die RF-Leistung 2,47 $W/cm^2$ beträgt.

**Revendications**

1. Support d'enregistrement magnétique thermoassisté comprenant un substrat (20), une sous-couche de Cr (21) placée sur le substrat (20), une couche tampon (22) de Pt placée sur la sous-couche (21), une couche magnétique (23) placée sur la couche tampon (22) et une couche d'enregistrement et de lecture (24) placée sur la couche magnétique (23),
   **caractérisé en ce que** la couche magnétique (23) est une couche de $Fe_xPt_{100-x}$, x allant de 45 à 55 ; et
   la couche d'enregistrement et de lecture (24) est une couche de $Co_yTb_{100-y}$, y allant de 65,8 à 71,9.

2. Support d'enregistrement magnétique thermoassisté selon la revendication 1, **caractérisé en ce que** le substrat (20) est un substrat en verre ou un substrat en Si oxydé.

3. Support d'enregistrement magnétique thermoassisté selon la revendication 1 ou 2, **caractérisé en ce que** la souscouche (21) a une épaisseur qui va de 10 à 100 nm.

4. Support d'enregistrement magnétique thermoassisté selon la revendication 3, **caractérisé en ce que** l'épaisseur de la sous-couche (21) est de 70 nm.

5. Support d'enregistrement magnétique thermoassisté selon l'une quelconque des revendications 1 à 4, **caractérisé en ce que** la couche tampon (22) a une épaisseur qui va de 1 à 10 nm.

6. Support d'enregistrement magnétique thermoassisté selon la revendication 5, **caractérisé en ce que** l'épaisseur de la couche tampon (22) est de 2 nm.

7. Support d'enregistrement magnétique thermoassisté selon l'une quelconque des revendications 1 à 6, **caractérisé en ce que** x est égal à 50 et y à 70,44.

8. Support d'enregistrement magnétique thermoassisté selon l'une quelconque des revendications 1 à 7, **caractérisé en ce que** la couche de $Fe_xPt_{100-x}$ (23) a une épaisseur qui va de 5 à 60 nm et la couche de $Co_yTb_{100-y}$ (24) a une épaisseur qui va de 20 nm à 60 nm.

9. Support d'enregistrement magnétique thermoassisté selon la revendication 8, **caractérisé en ce que** l'épaisseur de la couche de $Fe_xPt_{100-x}$ (23) est de 20 nm et l'épaisseur de la couche de $Co_yTb_{100-y}$ (24) est de 50 nm.

10. Support d'enregistrement magnétique thermoassisté selon l'une quelconque des revendications 1 à 9, **caractérisé en ce qu'**il comprend par ailleurs une couche de passivation (25) placée sur la couche d'enregistrement et de lecture (24).

11. Support d'enregistrement magnétique thermoassisté selon la revendication 10, **caractérisé en ce que** la couche de passivation (25) est une couche de nitrure de silicium.

12. Procédé pour fabriquer un support d'enregistrement magnétique thermoassisté, **caractérisé en ce qu'**il comprend les étapes qui consistent à :

(a) prévoir un substrat (11) ;
(b) réaliser un traitement thermique sur le substrat (11) ;
(c) former une sous-couche (12) de Cr sur le substrat (11) ;
(d) former une couche tampon (13) de Pt sur la sous-couche (12) ;
(e) former une couche (14) de $Fe_xPt_{100-x}$ sur la couche tampon (13), x allant de 45 à 55 ; et
(f) former une couche (15) de $Co_yTb_{100-y}$ sur la couche de $Fe_xPt_{100-x}$ (14), y allant de 65,8 à 71,9.

13. Procédé selon la revendication 12, **caractérisé en ce que** l'étape (b) comprend une étape qui consiste à :

chauffer le substrat (11) à une première température.

14. Procédé selon la revendication 13, **caractérisé en ce que** la première température est inférieure à 800°C.

15. Procédé selon revendication 14, **caractérisé en ce que** la première température est de 350°C.

16. Procédé selon la revendication 13, **caractérisé en ce que** lors de l'étape (b), le traitement thermique est réalisé pendant 5 à 90 minutes.

17. Procédé selon la revendication 16, **caractérisé en ce que** lors de l'étape (b), la première température est de 350°C, et le traitement thermique est réalisé pendant 30 minutes.

18. Procédé selon l'une quelconque des revendications 12 à 17, **caractérisé en ce que** lors de l'étape (b), le traitement thermique est réalisé à une pression qui va de $1 \times 10^{-9}$ à $1 \times 10^{-6}$ Torr ($1,33 \times 10^{-7}$ à $1,33 \times 10^{-4}$ Pa).

19. Procédé selon l'une quelconque des revendications 12 à 18, **caractérisé en ce que** lors de l'étape (c), la sous-couche (12) de Cr est formée sur le substrat (11) à une température de 350°C.

20. Procédé selon l'une quelconque des revendications 12 à 19, **caractérisé en ce que** lors de l'étape (d), la couche tampon (13) de Pt est formée sur la sous-couche (12) à une deuxième température inférieure à 800°C.

21. Procédé selon la revendication 20, **caractérisé en ce que** la deuxième température est de 350°C.

22. Procédé selon l'une quelconque des revendications 12 à 21, **caractérisé en ce que** lors de l'étape (e), la couche (14) de $Fe_xPt_{100-x}$ est formée sur la couche tampon (13) à une troisième température inférieure à 800°C.

23. Procédé selon la revendication 22, **caractérisé en ce que** la troisième température est de 420°C.

24. Procédé selon l'une quelconque des revendications 12 à 23, **caractérisé en ce que** lors de l'étape (f), la couche (15) de $Co_yTb_{100-y}$ est formée sur la couche (14) de $Fe_xPt_{100-x}$ à une quatrième température inférieure à 50°C.

25. Procédé selon la revendication 24, **caractérisé en ce que** la quatrième température est une température ambiante.

26. Procédé selon la revendication 24, **caractérisé en ce que** la sous-couche (12) de Cr, la couche tampon (13) de Pt, la couche (14) de $Fe_xPt_{100-x}$ et la couche (15) de $Co_yTb_{100-y}$ sont formées par pulvérisation cathodique par magnétron à courant continu dans une chambre de pulvérisation cathodique à ultravide.

27. Procédé selon la revendication 26, **caractérisé en ce que** la sous-couche (12) de Cr, la couche tampon (13) de Pt, la couche (14) de $Fe_xPt_{100-x}$ et la couche (15) de $Co_yTb_{100-y}$ sont déposées à une pression d'argon qui va de 2 à 12 mTorr (0,266 Pa à 1,596 Pa).

28. Procédé selon la revendication 27, **caractérisé en ce que** la pression d'argon est de 5 mTorr (0,665 Pa).

29. Procédé selon l'une quelconque des revendications 26 à 28, **caractérisé en ce que** la couche (14) de $Fe_xPt_{100-x}$ est déposée par pulvérisation cathodique par magnétron à courant continu avec une première puissance de courant continu qui va de 0,2 à 0,5 $W/cm^2$.

30. Procédé selon la revendication 29, **caractérisé en ce que** la première puissance de courant continu est de 0,22 $W/cm^2$.

31. Procédé selon l'une quelconque des revendications 26 à 30, **caractérisé en ce que** la couche (15) de $Co_yTb_{100-y}$ est déposée par pulvérisation cathodique par magnétron à courant continu avec une seconde puissance de courant continu qui va de 1 à 4 $W/cm^2$.

32. Procédé selon la revendication 31, **caractérisé en ce que** la seconde puissance de courant continu est de 2,96 $W/cm^2$.

33. Procédé selon l'une quelconque des revendications 12 à 32, **caractérisé en ce qu'**il comprend par ailleurs une étape qui consiste à :

(g) former une couche de passivation (16) sur la couche de $Co_yTb_{100-y}$.

34. Procédé selon la revendication 33, **caractérisé en ce que** la couche de passivation (16) est formée par pulvérisation cathodique par magnétron avec une énergie haute fréquence qui va de 2 à 7 $W/cm^2$.

35. Procédé selon la revendication 34, **caractérisé en ce que** l'énergie haute fréquence est de 2,47 $W/cm^2$.

```
┌─────────────────────────────────┐
│  Providing and heating a substrate │ ─── 11
└─────────────────────────────────┘
                 │
                 ▼
┌─────────────────────────────────┐
│ Forming a Cr underlayer on the substrate │ ─── 12
└─────────────────────────────────┘
                 │
                 ▼
┌─────────────────────────────────┐
│   Forming a Pt buffer layer on the Cr  │ ─── 13
│              underlayer              │
└─────────────────────────────────┘
                 │
                 ▼
┌─────────────────────────────────┐
│      Forming a first magnetic layer of │
│   $Fe_xPt_{100-x}$ on the Pt buffer layer │ ─── 14
└─────────────────────────────────┘
                 │
                 ▼
┌─────────────────────────────────┐
│    Forming a second magnetic layer of │
│  $Co_yTb_{100-y}$ on the first magnetic layer │ ─── 15
└─────────────────────────────────┘
                 │
                 ▼
┌─────────────────────────────────┐
│  Forming a passiviation layer of $Si_3N_4$ on │
│        the second magnetic layer       │ ─── 16
└─────────────────────────────────┘
```

Fig. 1

Fig. 2

Fig. 3

Fig. 4(A)

Fig. 4(B)

Fig. 5

Fig. 6

Fig. 7

Fig. 8

Fig. 9

**EP 1 887 568 B1**

**REFERENCES CITED IN THE DESCRIPTION**

**Patent documents cited in the description**

- US 20050041335 A1
- WO 2004086427 A
- US 20060188743 A1
- US 20030064249 A1